(19) Europäisches Patentamt
European Patent Office
Office européen des brevets

(11) EP 0 891 943 A1

(12) **EUROPEAN PATENT APPLICATION**
published in accordance with Art. 158(3) EPC

(43) Date of publication:
**20.01.1999 Bulletin 1999/03**

(21) Application number: **97911463.4**

(22) Date of filing: **06.11.1997**

(51) Int. Cl.$^6$: **C01B 31/08**, C04B 38/00

(86) International application number:
**PCT/JP97/04036**

(87) International publication number:
**WO 98/30496 (16.07.1998 Gazette 1998/28)**

(84) Designated Contracting States:
**DE FR GB IT SE**

(30) Priority: **09.01.1997 JP 2421/97**

(71) Applicant:
**NIPPON SANSO CORPORATION**
**Tokyo 105 (JP)**

(72) Inventors:
- **NAKAMURA, Akihiro, Nippon Sanso Corporation Tokyo 105 (JP)**
- **IWASAKI, Tadayoshi, Nippon Sanso Corporation Tokyo 105 (JP)**
- **INUI, Takashi, Nippon Sanso Corporation Tokyo 105 (JP)**
- **TATSUMI, Yasuo, Nippon Sanso Corporation Tokyo 105 (JP)**
- **ADACHI, Tadao, Nippon Sanso Corporation Tokyo 105 (JP)**
- **WATANABE, Yoshinori, Nippon Sanso Corporation Tokyo 105 (JP)**

(74) Representative: **Dealtry, Brian**
**Eric Potter Clarkson,**
**Park View House,**
**58 The Ropewalk**
**Nottingham NG1 5DD (GB)**

# (54) POROUS CARBON STOCK MATERIAL AND METHOD OF MANUFACTURING SAME

(57) A method for producing porous carbon material by halogenating a dry distillate carbon obtained by dry distillation of a carbon compound, characterized in employing dry distillate carbon having a hydrogen content in the range of 0.1-5.0% or dry distillate carbon obtained by dry distillation of a carbon compound at a temperature of 250-1200°C; or a method for producing porous carbon by halogenating a carbon compound, characterized in that the carbon compound employs a raw carbon compound and/or a carbon compound obtained by heating a carbon compound at a temperature of 250°C or less. By employing these methods, porous carbon can be obtained which, when compared to the conventional art, has superior adsorptive capability when employed as an adsorbing material for gas separation, and which has an excellent electrochemical storage capacity.

FIG.1

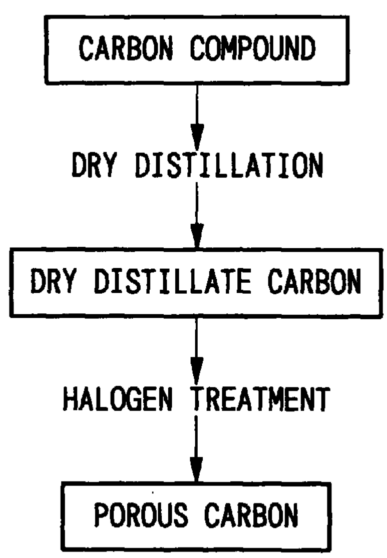


EP 0 891 943 A1

## Description

### Technical Field

The present invention is a production method for porous carbon having a micro and/or sub-micro pore structure suitable for adsorbing small molecules such as nitrogen or oxygen, the invention relating to a carbon material that can be optimally employed in adsorbing agents employed in industrial gas purification or separation, or in an electric double layer capacitor or other such electrode material.

This application is based on a patent application No. Hei 9-2421 filed in Japan, the content of which is incorporated herein by reference.

### Background Art

(Raw material for carbon)

There are various sources which are used as raw material for carbon, including carbonised plant or animal matter such as brown coal, lignite, anthracite, coke, charcoal, or char, or the material obtained by heating phenol, furan, vinylidene chloride or other such resins in an inert gas atmosphere. These materials are also applicable in the present invention. In the present invention, the general term "carbon compound" will be used to indicate a raw material prior to carbonization, this including a raw carbon compound in block form, the ground product of such a raw carbon compound, molded articles formed from the ground carbon compound, or the like. In addition, the material obtained after dry distillation of the carbon compound will be referred to as "dry distillate carbon".

(Applications of carbon material)

Because it is chemically inert, carbon has such wide applications as use as an adsorbent, catalyst, electrode material, structural material for machinery and the like. These applications are closely related to the structure of the carbon material.

So-called porous carbon has unique actions due to the presence of pores. For example, its adsorptive quality may be exploited when separating or purifying a mixture. Porous carbon may also be used as a medium for storing electrochemical energy in electric double layer capacitors or lithium secondary batteries.

(Structure of carbon material)

Carbon material may have a variety of structures according to the raw material or method of production employed.

Char or activated carbon, obtained by activating char, is formed from microcrystalline carbon (crystallite) or carbon having chain structure. A nongraphitizing carbon has a disorderly laminate structure of crystallites, with a wide range of micro to macro-sized pores forming between the crystallites.

In the crystallites, several net planes of carbon six-membered rings are stacked parallel on top of one another. In graphite carbon which forms the carbon six-membered ring, bonds are formed using the SP2 hybridized orbital. Netted layers comprising carbon six-membered rings is referred to as the base layer.

In the case of a graphitizing carbon, the carbon is heated at high temperatures to grow crystallites, ultimately forming graphite.

Non-organized carbon is typically included in a nongraphitizing carbon, or in a graphitizing carbon which has not completely graphitized. Non-organized carbon is non-graphite carbon which is chemically bonded only to graphite carbon, and may refer to carbon in a chain structure, carbon atoms attached near a carbon six-membered ring, carbon atoms on the outermost edge (the prism surface) of a carbon six-membered ring, or carbon atoms contained in the cross-bridge structures between carbon six-membered rings (crystallites). Non-organized carbon may be in the form of C-H, C-OH, C-OOH, C=O or the like, be bonded to a H or O atom, or form a carbon double bond (-C=C-).

Pores with a diameter of 0.8 nm or less are referred to as sub-micro pores, while pores with a diameter in the range of 0.8 to 2 nm are called micro-pores. The size of pores in this range is about the same order as the size as adsorbed molecules or ions. This pore structure is believed to be closely related to the phenomena of gas molecule adsorption and ion storage.

(Carbon adsorbent)

Active carbon, which is typically employed as a carbon adsorbent in gas separation, is produced by an activation method, and has been disclosed in Japanese Patent Application First Publication No. Hei 1-242409 (Steam Activation Method) and Japanese Patent Application First Publication No. Hei 5-132377 ($CO_2$ Activation Method). Further, Japanese Patent Application Second Publication No. Sho 52-18675 discloses a method for producing molecular sieving carbon for use in separating nitrogen gas from air.

(Electric double layer capacitor)

The electrode for an electric double layer capacitor is referred to as a polarizing electrode, and must have a large electrostatic capacity. The electric capacity (electrostatic capacity) stored in an electric double layer capacitor is roughly determined by the surface area of the solid-liquid interface. Accordingly, carbon, which has a large surface area and is conductive, is employed as an electrode material. In particular, active carbon which has been subjected to an activation treatment is used. Conventional examples of carbon electrodes for an electric double layer capacitor have been disclosed in Japanese Patent Application Second Publication No. Hei 4-70770. Japanese Patent Application Second Publication No. Sho 63-10574. Japanese Patent Application First Publication No. 4-175277 and Japanese Patent Application First Publication No. Hei 1-321620.

The adsorptive capacity of porous carbon produced by conventional methods has proved insufficient when the carbon is employed as an adsorbent for gases having a small molecular diameter, such as $N_2$ or $O_2$. Furthermore, when porous carbon produced by a conventional method is employed as the electrode material in an electric double layer capacitor or other such battery, the electrochemical energy storage capacity has not been sufficient.

## DISCLOSURE OF THE INVENTION

It is the object of the present invention to provide a porous carbon material which, when employed as an adsorbent for gas separation, has an adsorptive capability and an electrochemical energy storage capacity which are superior to that provided by the conventional art.

The present invention's method for producing a porous carbon material is to produce a porous carbon material by treating a dry distillate carbon obtained by dry distillation of a carbon compound with halogen, characterized in that the hydrogen content of the dry distillate carbon is in the range of 0.1~5.0% by weight.

Alternatively, the present invention's method for producing a porous carbon material is to produce a porous carbon material by treating a dry distillate carbon obtained by dry distillation of a carbon compound with halogen, characterized in that the dry distillate carbon is obtained by dry distillation of a carbon compound at a temperature of 250-1200°C.

Alternatively, the present invention's method for producing a porous carbon material is to produce a porous carbon material by treating a carbon compound with halogen, characterized in that the carbon compound is a raw carbon compound and/or a carbon compound obtained by heating a carbon compound at a temperature of 250°C or less.

The present invention's porous carbon material is produced by one of the aforementioned methods, and is characterized in that the amount of nitrogen adsorbed at 25°C and 1 atmospheric pressure is 12~20 $cm^3/g$.

Alternatively, the present invention's porous carbon material is produced by one of the aforementioned methods, and is characterized in having an electrostatic capacity in an electric double layer capacitor of 30~90$F/cm^3$.

## BRIEF DESCRIPTION OF THE FIGURES

FIG. 1 is a flow chart showing the method for producing a porous carbon material of the present invention.

FIG. 2 is a flow chart showing another method for producing a porous carbon material of the present invention.

FIG. 3 is a figure showing a schematic of the device for producing a carbon material of the present invention.

FIG. 4 is a schematic cross-sectional view of the device for measuring the electrostatic capacity.

FIG. 5 is a figure comparing the amount of nitrogen adsorbed by the carbon in the examples and the comparative examples.

FIG. 6 is a figure comparing the electrostatic capacity of the carbon in the examples and the comparative examples.

## PREFERRED EMBODIMENTS OF THE PRESENT INVENTION

The present invention is characterized in the production of a porous carbon material by treating either a carbon compound or a dry distillate carbon obtained by dry distillation of a carbon compound with halogen.

The first embodiment of the present invention, in the production method shown in FIG. 1 for producing a porous carbon material by treating a dry distillate carbon obtained by dry distillation of a carbon compound with halogen, is characterized in that the halogen treatment is carried out to dry distillate carbon having a hydrogen content in the range of 0.1~5.0% by weight.

The second embodiment of the present invention, in the method shown in FIG. 1 for producing a porous carbon material by treating a dry distillate carbon obtained by dry distillation of a carbon compound with halogen, characterized in that the halogen treatment is carried out to a dry distillate carbon obtained by dry distillation at a temperature of 250-1200°C.

The third embodiment of the present invention, in the method shown in FIG. 2 for producing a porous carbon material by treating a carbon compound with halogen, characterized in that the carbon compound is a raw carbon compound and/or a carbon compound obtained by heating a raw carbon compound at a temperature of 250°C or less (hereinafter, the former being referred to simply as "carbon compound").

(Raw carbon compound)

The present invention may be applied to a variety of raw carbon compounds. However, particularly suitable are char, phenol resin, furan resin, vinylidene chloride resin, and pitch. When the form of the raw carbon compound is too large, it becomes difficult for the dry distillation or oxidation to proceed uniformly and rapidly throughout the interior of the material, so that this is undesirable. When the size of the raw carbon compound is approximately 10 mm or more, dry distillation may be carried out after rough grinding to a degree of about 2~4 mm. When the raw carbon compound is a polymer resin, grinding may be carried out after hardening the resin by heating to form cross-bridges. A conventional method for rough grinding a raw carbon compound may be suitably employed. When the form of the raw carbon compound is roughly 0.1 mm or less, it becomes inconvenient to handle the raw material during dry distillation or oxidation. Therefore, a binder is added to render the material into pellets (small columns) having a diameter of 2 mm and a length of 4 to 5 mm, for example.

(Dry distillation treatment)

Dry distillation is the process of promoting carbonization by removing hydrogen and oxygen from a carbon compound. The method typically employed is heating in an inert gas such as nitrogen or argon.

In the first embodiment, in order to sufficiently realize the effects of the halogen treatment, the hydrogen content of the dry distillate carbon (the quantity (g) of hydrogen in the dry distillate carbon with respect to the weight (g) of the dry distillate carbon, expressed as a percentile) is 0.1~5.0% by weight, with 0.15~3.0% by weight being preferable. When the quantity is below 0.1% by weight, the hydrogen-halogen substitution is insufficient, so that the effects of the halogen treatment are not sufficiently realized. Further, when the quantity exceeds 5.0% by weight, then the effects of the halogen treatment are not sufficiently obtained.

In the second embodiment of the present invention, the temperature for the dry distillation treatment is 250~1200°C, preferably 300~1150°C, and even more preferably 500~1100°C. When the dry distillation temperature is below 250°C, carbonization is insufficient, while at a temperature of the halogen treatment below 500°C, the effects of the dry distillation do not proceed on par so that the effect of the halogen treatment is not obtained. When carrying out the dry distillation at a temperature in excess of 1200°C, carbonization proceeds too rapidly so that it is not possible to maintain the remaining hydrogen at a level of 0.1% by weight. Moreover, in this case, the carbon graphite structure increases and the amount of non-organized carbon decreases. Thus, the halogenation reaction does not occur sufficiently, so that the effects of the halogen treatment are not sufficiently obtained.

The quantity of inert gas supplied (i.e., the superficial velocity) during the dry distillation operation is 0.05~0.3 $L/cm^2 \cdot min$ (where L is the gas volume at approximately atmospheric pressure and room temperature, and $cm^2$ is the cross-sectional area of the reaction furnace. These definitions will apply hereinafter.)

The carbon (dry distillate carbon) supplied to the halogen treatment in the first and second embodiments of the present invention naturally includes carbon in which the step for carbonization of a carbon compound precedes through a solid phase, as well as carbon obtained via a liquid phase, and carbon obtained by heat decomposition and precipitation in a gas phase.

When a raw carbon compound or a sample obtained by heating a raw carbon compound at 250°C or less is heated in an inert gas containing a halogen at a temperature preferably at 500°C or more, the dry distillation and halogenation processes are carried out in parallel to obtain the effects of the present invention (see third embodiment).

(Function of dry distillation)

Dry distillation precedes in both the solid and liquid phases. Hydrogen, carbon and oxygen atoms which are included in the raw carbon compound volatize low molecular paraffin, olefin or aromatic hydrocarbons at relatively low dry distillation temperatures, with $CO_2$, CO and methane and hydrogen released as the temperature increases. In the remaining solid or liquid phase, breakdown of the carbon bonds, ring formation, aromatization and polymer condensation reactions occur, to form graphite structure carbon.

In the first and second embodiments of the present invention, the halogenation process is a reaction between non-organized carbons in the dry distillate carbon and the halogen. Thus, the extent of halogenation is determined by the quantity of non-organized carbon. The amount of non-organized carbon is determined by the extent of dry distillation, i.e., by the dry distillation temperature. Accordingly, the effect of halogenation depends on the dry distillation temperature. In the third embodiment of the present invention, the dry distillation and halogenation processes are carried out in parallel, so that the degree of halogenation is determined by the temperature of the halogen treatment.

(Pellet formation)

If the size of the raw carbon compound is, for example, 0.1 mm or less, a binder may be added to form a pellet, for example, in order to facilitate subsequent processing. Note, however, that 0.1 mm is merely an example and is not intended as a limitation on the present invention.

Phenol resin, pitch, coal tar or the like may be employed as the binder. In order to improve the pelletizing operation or the mold releasability, ethanol or fluid paraffin may be added. If the amount of binder added is too great, then there is a deterioration in the effects obtained from the halogen treatment, while if the amount of binder is too little, then the physical strength of the material following pelletization decreases. For example, a binder is suitably employed in which the total amount of phenol resin, solvent and fluid paraffin added is 30 to 60 parts by weight with respect to 100 parts by weight of the dry distillate carbon in embodiments 1 and 2, or to 100 parts by weight of the carbon compound in embodiment 3.

Pellets are formed of the dry distillate carbon or the carbon compound, and then dried. Drying is carried out by heating the pellets at 140~200°C, and preferably 150~180°C, in order to remove the low-temperature volatile components included in the binder, increase the pellet strength, and optimize subsequent dry distillation.

It is preferable that pellets which have been formed by adding binder to powdered dry distillate carbon or powdered carbon compound, and then dried, are subjected to dry distillation again in order to carbonize the binder. In this additional dry distillation treatment, heating is carried out in an inert gas such as nitrogen gas. The conditions for the additional dry distillation treatment may be the same as those for the dry distillation treatment of the raw carbon compound.

(Halogen treatment)

In the first and second embodiments, a halogen treatment is performed on a dry distillate carbon obtained by dry distillation of a carbon compound. In the third embodiment, the halogen treatment is carried out on a raw carbon compound or a carbon compound obtained by heating a raw carbon compound at a temperature of 250°C or less.

This halogen treatment consists of halogenation and dehalogenation treatments.

In the halogenation treatment, dry distillate carbon or a carbon compound is heated in a halogen or an inert gas containing a halogen, causing the halogen to react. Any halogen may be employed, however, chlorine or bromine are optimally employed.

The heating temperature during halogenation of the dry distillate carbon is in the range of 350~1000°C, and preferably 450~800°C. When the temperature is below 350°C, the reaction requires a long time so that efficiency is decreased. Conversely, when the temperature is in excess of 1000°C, hydrogen atoms are decreased due to the progression of the dry distillation process, thus impeding the halogenation reaction. When halogenating a raw carbon compound or a carbon compound obtained by heating a raw carbon compound at 250°C or less, or when halogenating a mixture thereof, the temperature is preferably 500~1000°C, and even more preferably 600~800°C.

With respect to the halogen concentration during the halogenation process, the concentration of halogen gas in nitrogen gas, for example, is preferably 1~50% by volume, and even more optimally, 3~30% by volume. The present invention is not limited to these ranges, however. The superficial velocity of a gas containing a halogen is not particularly limited, but is acceptable within the range of 0.05~0.3 $L/cm^2 \cdot min$.

In the dehalogenation treatment, either (a) a high-temperature dehalogenation treatment, or (b) a low-temperature dehalogenation treatment may be employed. Alternatively, treatment (b) may be carried out after treatment (a), or treatment (a) may be carried out after treatment (b).

In the high-temperature dehalogenation treatment, the halogenated carbon is heated in an inert gas such as nitrogen or argon, or under evacuation. A vacuum of 10 mmHg during evacuation is acceptable. The heating temperature is preferably 600~1300°C, and more preferably 650~1200°C. When the temperature is below 600°C, there are not enough reactions to form arrays or bonds between the carbon atoms accompanying dehalogenation. Conversely, when the temperature is above 1300°C, there is considerable heat contraction, which has an undesirable effect on the formation of the pore structure. The amount of inert gas supplied is not particularly limited, but is suitable in a range of 0.05~0.3 $L/cm^2 \cdot min$.

In the low-temperature dehalogenation treatment, halogenated carbon is heated in a hydrogenous compound (i.e., a compound containing H atoms) or an inert gas containing a hydrogenous compound. Steam; lower hydrocarbons such as methane, ethane, ethylene, propane, propylene, butane, or butylene; hydrogen; or a gas mixture of these may be employed for the hydrogenous compound. Also, the combustion exhaust gas produced when liquified petroleum gas (LPG) is imperfectly burned may be optimally employed on an industrial scale.

The concentration of the hydrogenous compound may be 2~10% by volume in the case of steam, 5~50% by volume in the case of a lower hydrocarbon, and 10~60% by volume in the case of hydrogen. The amount of gas supplied during the low temperature dehalogenation treatment is suitable in the range of 0.05~0.3 $L/cm^2 \cdot min$.

The temperature of the low-temperature dehalogenation treatment is preferably 600~850°C when the hydrogenous compound is steam or a lower hydrocarbon. When the temperature is below 600°C, the treatment time is extended. Conversely, a temperature is in excess of 850°C is undesirable because it gives rise to activation in the case of steam, or carbon precipitation in the case of lower hydrocarbons. When the hydrogenous compound is hydrogen, the preferred temperature range is 600~1200°C. When the temperature is below 600°C, the treatment time is extended, while at temperatures in excess of 1200°C there is a disadvantageous effect on formation of the pore structure due to heat contraction.

(Function of halogenation treatment)

When a halogen gas is brought into contact with dry distillate carbon or a carbon compound, the halogen gas reacts with the non-organized carbon. Various reactions occur, including a halogen addition reaction to carbon double bonds, a substitution reaction between the halogen atoms and the hydrogen atoms bonded to non-organized carbons (generating halogenated hydrogen in an amount equimolar to the halogen), and a dehydrogenation reaction. A variety of reactions occur during the halogenation and dehalogenation reactions. However, it is presumed that the reaction expressed by the following representative formula occurs to form new bonds (i.e., carbon bonds) between the carbon atoms:

$$C \cdot - Cl + C \cdot - H \rightarrow C - C + HCl$$

(Where the dot placed next to the carbon atoms above indicates non-organized carbon.)

Reactions such as described above, and the newly formed carbon bonds, function to restore defects in the carbon net plane or the crystallite graphite structure, grow the crystallites, change the state of aggregation of the crystallites, and the like. Presumably, this provides such results as formation of numerous micro and/or sub-micro pores with excellent adsorption of small molecules suitably employed when electrolytic ions like sulfuric acid ion form an electric double layer.

As a result of the present invention, a carbon material for an adsorptive agent in which the quantity of nitrogen gas adsorbed is 12~20 $cm^3/g$, and a carbon material for an electric double layer capacitor having an electrostatic capacity of 30~90 $F/cm^3$ are obtained.

Examples

Examples will now be employed in order to clarify the effects of the present invention. However, these are provided merely to exemplify the present invention and are in no way intended as a limitation thereon.

(Grinding)

The dry distillate carbon was ground in a small model vibration ball mill NB-0 manufactured by Nitto Chemical Ltd. The degree of grinding was adjusted by changing the grinding duration. When grinding a raw carbon compound, the grinding size when employing a cracker mill was about 2~5 mm.

(Pellet formation)

Pelletizing was performed in a disk pelleter (Fuji-Paudaru K.K. model PV-5). Unless otherwise indicated below, pellets having a size of 2 mm∅ x 5~6 mm were formed.

(Equipment for dry distillation and halogen treatment)

An schematic of the equipment used in the dry distillation and halogenation processes in the present invention are shown in FIG. 3. In the figure, the numeral 1 is a heating furnace, 2 is a quartz pipe, 3 is a heat-resistant, gas permeable shelf (for receiving the carbon material), 4 is the carbon material, 5 is a nitrogen gas supply pipe, 6 is a halogen or steam supply pipe for the halogen treatment, 7 is a gas exhaust pipe, and 8 is a rubber stopper. The heating furnace functions to control the temperature as desired. The supply pressure for each of the gases is approximately atmospheric pressure. The quantity of gas supplied was measured with a float-type flow meter.

(Halogen treatment)

Unless otherwise noted in the following embodiments, halogen treatment was carried out as described below.

Where treating with Cl, a dry distillate carbon sample (5~15g) was chlorinated by heating for one hour at 600°C at a nitrogen gas flow rate of 1L/min, the nitrogen gas containing 10% by volume chlorine gas. Next, the chlorinated dry distillate carbon was heat treated for 30 min at 900°C under a nitrogen gas flow rate of 2L/min. Dechlorination was then carried out by heating for 30 min at 700°C under a nitrogen gas flow rate of 1L/min, the nitrogen gas containing saturated steam at a temperature of 25°C. Experiments were also carried out in which chlorination was performed by heating the raw carbon compound in an inert gas containing a halogen gas, after which a dehalogenation process was performed.

When treating with bromine, the same process was performed with the exception that bromination was performed for 3 hours under a nitrogen gas flow containing 8% by volume bromine.

The weight increase (%) during halogenation is indicated by:

$$(\text{Weight (g) of carbon after halogenation} / \text{Original weight (g) of carbon}) \times 100$$

The weight increase may become a negative value (indicated by a minus sign below) during the halogenation treatment because carbonation proceeds in parallel with the reduction in weight.

(Measurement of quantity adsorbed)

The measurement of the quantity of nitrogen adsorbed in the following embodiments was performed using a capacity method (Bellsop 28, manufactured by Nippon Bell Ltd.) at 25°C and 1 atmospheric pressure. Prior to measurement, the sample was degassed by evacuating for 2 hours at 100°C. In the following embodiments, the quantity adsorbed is the volume of gas adsorbed at 25°C and 1 atmospheric pressure.

(Measurement of electrostatic capacitance)

Halogen treated carbon was ground to an average pellet diameter of 9 µm, rendered into a paste by adding an aqueous solution of 30% by weight sulfuric acid, and introduced into two vinyl chloride resin mold flasks (diameter 25 mm, thickness 2 mm). The two mold flasks were then directed toward one another, with a polypropylene separator held therebetween. Platinum collecting electrodes where then placed on either side of the two mold flasks. In this way, the electrostatic capacitance measuring cell shown in FIG. 4 was prepared. In the figure, the numeral 11 is a carbon electrode, 12 is a gasket, 13 is the collecting electrode, and 14 is the separator. The electrostatic capacitance C (F) is determined by the following formula, wherein the time $\Delta t$ (s) required for the charged cell to drop from voltage V1 (V) to V2 (V) while being discharged at a constant current I (A) is measured:

$$C = I \times \Delta t / (V1 - V2)$$

In this measurement, the electrostatic capacitance is determined by measuring the time required for the voltage to drop from V1=540mV to V2=360mV during constant discharge (I=4mA/cm$^2$), following charging for 24 hours at 900mV. The electrostatic capacitance is the value per 1 cm$^3$ carbon.

(Analysis of hydrogen quantity)

Approximately 3g of carbon is completely combusted under a mixed gas flow of 0.1L/min oxygen and 0.9L/min nitrogen. The hydrogen is converted to steam and adsorbed by a $P_2O_5$ adsorbing tube. The quantity of steam is determined from the weight increase, and the quantity of hydrogen is determined by calculation. The quantity of hydrogen (i.e., hydrogen content) with respect to the weight of the carbon is expressed as % by weight.

(Comparative Example 1: Phenol resin)

Phenol resin (PGA-4560 manufactured by Gunei Chemical Industries Co. Ltd.) was hardened at approximately 160°C, ground, and formed into pellets by adding phenol resin as a binder. Samples 1-4 each comprising approximately 15 g of this product were subjected to dry distillation under a nitrogen gas flow rate of 1L/min by heating for 30 min at 600°C, 800°C, 1000°C and 1100°C, respectively. The amount of nitrogen gas adsorbed by each of samples 1-4 was 5.2 cm$^3$/g, 10.4 cm$^3$/g, 11.2 cm$^3$/g, and 10.8 cm$^3$/g, respectively. The electrostatic capacitance of electric double layer capacitors employing samples 1-4 was 7.7 F/cm$^3$, 16.1 F/ cm$^3$, 14.4 F/ cm$^3$ and 11.8 F/ cm$^3$, respectively.

(Comparative Example 2: Phenol resin)

Phenol resin was hardened, ground and formed into pellets by adding phenol resin as a binder. Samples 1 and 2 each comprising approximately 15 g of this product were subjected to dry distillation under a nitrogen gas flow rate of 1L/min by heating for 30 min at 300°C and 400°C, respectively. Chlorination was then carried out by heating sample 1 at 300°C for 16 hours, and sample 2 at 400°C for 16 hours, under a nitrogen gas flow rate of 1L/min, the nitrogen gas containing 10% by volume chlorine gas. The increase in weight during chlorination was -0.7% by weight for sample 1 and -1.8% by weight for sample 2. The samples were then dechlorinated by heating at 900°C at a 2L/min nitrogen gas flow rate, followed by heating for 20 min at 700°C at a 1L/min flow of nitrogen gas containing saturated steam at 25°C. The amount of nitrogen gas adsorbed was 10.9 $cm^3/g$ and 10.9 $cm^3/g$ for each of samples 1 and 2. The electrostatic capacitance of electric double layer capacitors employing samples 1 and 2 was 15.3 $F/cm^3$ and 15.2 $F/ cm^3$, respectively.

(Comparative Example 3: char)

Approximately 15g of char ground to a size of roughly 2~5mm was dry distilled by heating for 20 min at 500°C at a nitrogen gas flow rate of 1L/min. Samples 1-5 comprising this dry distillate carbon were then subjected to dry distillation again for 30 min at a nitrogen gas flow rate of 1L/min by heating at 600°C, 700°C, 800°C, 1000°C, and 1100°C, respectively.

The amount of nitrogen gas adsorbed by samples 1-5 was 4.7 $cm^3/g$, 5.6 $cm^3/g$, 7.2 $cm^3/g$, 9.1 $cm^3/g$, and 7.6 $cm^3/g$, respectively. The electrostatic capacitance of electric double layer capacitors employing samples 1-5 was 3.7 $F/cm^3$, 11.3 $F/cm^3$, 12.9 $F/cm^3$, 9.5 $F/cm^3$, and 6.0 $F/cm^3$, respectively.

(Comparative Example 4: Furan resin)

Furan resin (VF-302 manufactured by Hitachi Kasei Kogyo Ltd.) was hardened, ground and then formed into pellets by adding phenol resin as a binder. Samples 1-4 each comprising approximately 15 g of this product were subjected to dry distillation under a nitrogen gas flow rate of 1L/min by heating for 30 min at 600°C, 800°C, 1000°C and 1100°C, respectively. The amount of nitrogen gas adsorbed by each of samples 1-4 was 4.8 $cm^3/g$, 9.9 $cm^3/g$, 10.6 $cm^3/g$, and 6.8 $cm^3/g$, respectively. The electrostatic capacitance of electric double layer capacitors employing each of the samples was 5.7 $F/cm^3$, 15.3 $F/cm^3$, 11.2 $F/ cm^3$ and 6.3 $F/ cm^3$, respectively.

(Comparative Example 5: vinylidene chloride resin)

Vinylidene chloride resin (commercially available as a wrap) was subjected to dry distillation for 30 min at 500°C, ground and formed into pellets by adding phenol resin as a binder. Samples 1-4 each comprising approximately 15 g of this product were subjected to dry distillation again under a nitrogen gas flow rate of 1L/min by heating for 30 min at 600°C, 800°C, 1000°C and 1100°C, respectively. The amount of nitrogen gas adsorbed by samples 1-4 was 7.4 $cm^3/g$, 10.6 $cm^3/g$, 11.0 $cm^3/g$, and 10.8 $cm^3/g$, respectively. The electrostatic capacitance of electric double layer capacitors employing samples 1-4 was 6.6 $F/cm^3$, 15.8 $F/cm^3$, 14.1 $F/cm^3$, and 11.1 $F/cm^3$, respectively.

(Comparative Example 6: Petroleum pitch)

Petroleum pitch was oxidized by heating for 5 hours in a 250°C dryer. Samples 1-4 each comprising approximately 15 g of this pitch were subjected to dry distillation under a nitrogen gas flow rate of 1L/min by heating for 30 min at 600°C, 800°C, 1000°C and 1100°C, respectively. The amount of nitrogen gas adsorbed by samples 1-4 was 1.9 $cm^3/g$, 7.7 $cm^3/g$, 8.9 $cm^3/g$, and 7.5 $cm^3/g$, respectively. The electrostatic capacitance of electric double layer capacitors employing samples 1-4 was 2.1 $F/cm^3$, 12.0 $F/cm^3$, 8.2 $F/cm^3$, and 5.0 $F/cm^3$, respectively.

(Example 1: Phenol resin, chlorine treatment)

Phenol resin was hardened, ground, and formed into pellets by adding phenol resin as the binder. The amount hydrogen was analyzed and found to be 3.00% by weight. Approximately 15g of the sample was chlorinated by heating for 1 hour at 500°C at a 1L/min flow of nitrogen gas containing 10% by volume chlorine gas. The increase in weight due to chlorination was -14.7% by weight. The sample was then dechlorinated by heating at 900°C at a 2L/min nitrogen gas flow rate, and then heated for 20 min at 700°C under a 1L/min flow of nitrogen gas containing saturated steam at 25°C.

The amount of nitrogen gas adsorbed by the carbon material was 14.0 $cm^3/g$. The electrostatic capacitance of the electric double layer capacitor was 66.4 $F/cm^3$. The chlorination temperature of 500°C is also effective in the case of chlorinating a raw phenol resin. An amount of 3.00% by weight for the hydrogen in the dry distillate carbon was effective, while large values were obtained for both the amount of nitrogen gas adsorbed and the electrostatic capacitance.

(Example 2: Phenol resin, chlorine treatment)

Phenol resin was hardened, ground, and formed into pellets by adding phenol resin as a binder (sample 1). Approximately 15g of samples 2-7 were dry distilled at a nitrogen gas flow rate of 1L/min by heating for 30 min at 300°C, 600°C, 800°C, 900°C, 1000°C and 1100°C, respectively. The quantity of hydrogen gas included in the dry distillate carbon in samples 1-7 was 3.00% by weight, 2.95% by weight, 2.35% by weight, 1.00% by weight, 0.56% by weight, 0.48% by weight, and 0.33% by weight, respectively.

Chlorination of these samples was then performed by heating for 1 hour at 600°C at a 1L/min flow rate of nitrogen gas containing 10% by volume chlorine gas. The increase in weight due to chlorination for samples 1-7 was -21.3% by weight, -15.7% by weight, 20.4% by weight, 22.3% by weight, 18.3% by weight, 12.4% by weight, and 9.9% by weight, respectively. These samples were then dechlorinated by heating at 900°C at a 2L/min nitrogen gas flow rate, and then heating for 20 min at 700°C under a 1L/min flow of nitrogen gas containing saturated steam at 25°C.

The amount of nitrogen gas adsorbed by each of the carbon materials of samples 1-7 was 15.5 $cm^3/g$, 15.7 $cm^3/g$, 16.2 $cm^3/g$, 14.9 $cm^3/g$, 14.2 $cm^3/g$, 13.0 $cm^3/g$, and 12.2 $cm^3/g$, respectively. The electrostatic capacitance of the electric double layer capacitors using samples 1-7 was 71.1 $F/cm^3$, 73.2 $F/cm^3$, 76.6 $F/cm^3$, 73.0 $F/cm^3$, 65.8 $F/cm^3$, 53.0 $F/cm^3$, and 40.5 $F/cm^3$, respectively. A dry distillation temperature in the range of 300~1100°C was effective, and was also effective in the case where chlorinating raw phenol resin. A hydrogen content of 3.00~0.33% by weight in the dry distillate carbon was effective. Large values were obtained for both the amount of nitrogen gas adsorbed and the electrostatic capacitance.

(Example 3: Char, chlorine treatment)

Char was ground to a size of roughly 2~5mm (sample 1). For samples 2-6, approximately 15g of this material was subjected to dry distillation again at a nitrogen gas flow rate of 1L/min by heating for 30 min at 600°C, 800°C, 900°C, 1000°C, and 1100°C, respectively. The amount of hydrogen included in the dry distillate carbon of samples 1-6 was 2.80% by weight, 2.01% by weight, 0.77% by weight, 0.54% by weight, 0.47% by weight, and 0.35% by weight, respectively. Chlorination was then carried out on each of the samples by heating for 1 hour at 600°C under a 1L/min flow rate of nitrogen gas containing 10% by volume chlorine gas. The increase in weight of samples 1-6 during chlorination was -65.0% by weight, 27.9% by weight, 25.3% by weight, 18.3% by weight, 7.3% by weight, and 3.9% by weight, respectively. These samples were then dechlorinated by heating at 900°C under a nitrogen gas flow rate of 2L/min, and then heating again for 20 min at 700°C under a 1L/min flow rate of nitrogen gas containing 25°C saturated steam.

The amount of nitrogen gas adsorbed by each of the carbon materials for samples 1-6 was 14.3 $cm^3/g$, 15.3 $cm^3/g$, 14.2 $cm^3/g$, 13.9 $cm^3/g$, 13.0 $cm^3/g$, and 12.1 $cm^3/g$, respectively. The electrostatic capacitance of the electric double layer capacitors employing samples 1-6 was 63.0 $F/cm^3$, 64.6 $F/cm^3$, 63.9 $F/cm^3$, 54.6 $F/cm^3$, 42.5 $F/cm^3$, and 30.1 $F/cm^3$, respectively. A dry distillation temperature in the range of 600~1100°C was effective, and was also effective in the case where chlorinating raw char. A hydrogen content of 2.80~0.35% by weight in the dry distillate carbon was effective. Large values were obtained for both the amount of nitrogen gas adsorbed and the electrostatic capacitance.

(Example 4: Furan resin, chlorine treatment)

Furan resin was hardened, ground and formed into pellets by adding phenol resin as a binder (sample 1). Approximately 15g of samples 2-6 were subjected to dry distillation at a nitrogen gas flow rate of 1L/min by heating for 30 min at 300°C, 600°C, 800°C, 1000°C, and 1100°C, respectively. The amount of hydrogen included in the raw material and the dry distillate carbon of samples 1-6 was 3.20% by weight, 3.10% by weight, 2.10% by weight, 0.90% by weight, 0.34% by weight, and 0.20% by weight, respectively.

Chlorination was then carried out on each of the samples by heating for 1 hour at 600°C under a 1L/min flow rate of nitrogen gas containing 10% by volume chlorine gas. The increase in weight of samples 1-6 during chlorination was -45.3% by weight, -30.2% by weight, 23.2% by weight, 19.3% by weight, 5.8% by weight, and 3.3% by weight, respectively. These samples were then dechlorinated by heating at 900°C at a nitrogen gas flow rate of 2L/min, and then heating again for 20 min at 700°C at a 1L/min flow rate of nitrogen gas containing 25°C saturated steam.

The amount of nitrogen gas adsorbed by each of the carbon materials for samples 1-6 was 14.5 $cm^3/g$, 14.8 $cm^3/g$, 15.4 $cm^3/g$, 14.1 $cm^3/g$, 12.9 $cm^3/g$, and 12.4 $cm^3/g$, respectively. The electrostatic capacitance of the electric double layer capacitors employing samples 1-6 was 72.0 $F/cm^3$, 73.3 $F/cm^3$, 74.3 $F/cm^3$, 75.0 $F/cm^3$, 51.5 $F/cm^3$, and 45.5 $F/cm^3$, respectively. A dry distillation temperature in the range of 300~1100°C was effective, and was also effective in the case where chlorinating raw furan resin. A hydrogen content of 3.2~0.20% by weight in the dry distillate carbon was effective. Large values were obtained for both the amount of nitrogen gas adsorbed and the electrostatic capacitance.

(Example 5: Vinylidene chloride resin, chlorine treatment)

Vinylidene chloride resin was subject to dry distillation for 30 min at 500°C, ground and formed into pellets adding phenol resin as a binder. Approximately 15g of this material was subjected to dry distillation again by heating for 30 min at a nitrogen gas flow rate of 1L/min at 600°C, 800°C, 1000°C, and 1100°C for samples 1-4, respectively. The amount of hydrogen included in the dry distillate of samples 1-4 was 2.01% by weight, 0.90% by weight, 0.32% by weight, and 0.19% by weight, respectively.

Chlorination was then carried out on each of the samples by heating for 1 hour at 600°C under a 1L/min flow rate of nitrogen gas containing 10% by volume chlorine gas. The increase in weight of samples 1-4 during chlorination was 25.2% by weight, 18.5% by weight, 7.1% by weight, and 3.8% by weight, respectively. These samples were then dechlorinated by heating at 900°C at a nitrogen gas flow rate of 2L/min, and then heating again for 20 min at 700°C at a 1L/min flow rate of nitrogen gas containing 25°C saturated steam.

The amount of nitrogen gas adsorbed by each of the carbon materials for samples 1-4 was 15.3 $cm^3/g$, 14.6 $cm^3/g$, 13.4 $cm^3/g$, and 12.8 $cm^3/g$, respectively. The electrostatic capacitance of the electric double layer capacitors employing samples 1-4 was 72.8 $F/cm^3$, 70.4 $F/cm^3$, 51.3 $F/cm^3$, and 44.9 $F/cm^3$, respectively. A dry distillation temperature in the range of 600~1100°C was effective. Hydrogen in the amount of 2.01~0.19% by weight in the dry distillate carbon was effective. Large values were obtained for both the amount of nitrogen gas adsorbed and the electrostatic capacitance.

(Example 6: Petroleum pitch, chlorine treatment)

Petroleum pitch was oxidized by heating for 5 hours in a 250°C dryer (sample 1). Samples 2-5 each comprising approximately 15 g of this pitch were subjected to dry distillation under a nitrogen gas flow rate of 1L/min by heating for 30 min at 600°C, 800°C, 1000°C and 1100°C, respectively. The amount of hydrogen contained in each of the samples 1-5 was 4.20% by weight, 2.01% by weight, 0.90% by weight, 0.40% by weight and 0.22% by weight, respectively. Next, chlorination was carried out by heating each of the samples for 1 hour at 600°C at a 1L/min flow rate of nitrogen gas containing 10% by volume chlorine gas. The increase in weight of samples 1-5 during chlorination was -12.0% by weight, 19.8% by weight, 20.0% by weight, 6.4% by weight, and 3.5% by weight, respectively. These samples were then dechlorinated by heating at 900°C under a nitrogen gas flow rate of 2L/min for 20 min, and then heating again at 700°C under a 1L/min flow rate of nitrogen gas containing 25°C saturated steam.

The amount of nitrogen gas adsorbed by each of samples 1-5 was 14.7 $cm^3/g$, 15.5 $cm^3/g$, 14.4 $cm^3/g$, 12.7 $cm^3/g$ and 12.0 $cm^3/g$, respectively. The electrostatic capacitance of electric double layer capacitors employing each of the samples was 67.6 $F/cm^3$, 69.5 $F/cm^3$, 67.2 $F/cm^3$, 47.4 $F/cm^3$, and 34.5 $F/cm^3$, respectively. A dry distillation temperature in the range of 600~1100°C was effective, and was also effective in the case where chlorinating oxidized raw petroleum pitch. Hydrogen in an amount of 4.20~0.22% by weight in the dry distillate carbon was effective. Large values were obtained for both the amount of nitrogen gas adsorbed and the electrostatic capacitance.

(Example 7: Phenol resin, bromine treatment)

Phenol resin was hardened, ground and formed into pellets by adding phenol resin as a binder. Dry distillate carbon samples 1-5 were obtained by subjecting approximately 15g of this material to dry distillation by heating samples 1-5 for 20 min under a nitrogen gas flow rate of 1L/min at 600°C, 800°C, 900°C, 1000°C, and 1100°C, respectively. The amount of hydrogen included in each of samples 1-5 was 2.35% by weight, 1.00% by weight, 0.56% by weight, 0.48% by weight and 0.33% by weight, respectively. Bromination was then carried out on each of the samples by heating for 3 hours at 600°C under a 1L/min flow rate of nitrogen gas containing 8% by volume bromine. The increase in weight of samples 1-5 during bromination was 19.3% by weight, 30.1% by weight, 18.0% by weight, 12.0% by weight and 9.6% by weight, respectively. These samples were then debrominated by heating for 20 min at 900°C at a nitrogen gas flow rate of 2L/min, and then heating at 700°C at a 1L/min flow rate of nitrogen gas containing 25°C saturated steam.

The amount of nitrogen gas adsorbed by samples 1-5 was 16.2 $cm^3/g$, 14.8 $cm^3/g$, 14.0 $cm^3/g$, 13.0 $cm^3/g$ and 12.0 $cm^3/g$, respectively. The electrostatic capacitance of the electric double layer capacitors employing samples 1-5 was 76.6 $F/cm^3$, 72.7 $F/cm^3$, 65.0 $F/cm^3$, 52.0 $F/cm^3$ and 40.0 $F/cm^3$, respectively. A dry distillation temperature in the wide range of 600~1100°C was effective. Hydrogen in the amount of 2.35~0.33% by weight was effective. Large values were obtained for both the amount of nitrogen gas adsorbed and the electrostatic capacitance.

(Example 8: char, bromine treatment)

Dry distillate carbon samples were obtained by heating approximately 15g of ground char at a nitrogen gas flow rate of 1L/min for 20 min at 600°C, 800°C, 900°C, 1000°C, and 1100°C, respectively. The amount of hydrogen included in samples 1-5 was 2.01% by weight, 0.77% by weight, 0.54% by weight, 0.47% by weight, and 0.35% by weight, respectively. Bromination was then carried out on each of the samples by heating for 3 hours at 600°C under a 1L/min flow rate of nitrogen gas containing 8% by volume bromine. The increase in weight of samples 1-5 during bromination was 26.9% by weight, 24.4% by weight, 17.6% by weight, 7.1% by weight, and 3.6% by weight, respectively. These samples were then debrominated by heating at 900°C under a nitrogen gas flow rate of 2L/min for 20 min, and then heating again at 700°C under a 1L/min flow rate of nitrogen gas containing 25°C saturated steam.

The amount of nitrogen gas adsorbed by samples 1-5 was 14.9 $cm^3/g$, 13.9 $cm^3/g$, 13.4 $cm^3/g$, 12.5 $cm^3/g$, and 12.0 $cm^3/g$, respectively. The electrostatic capacitance of electric double layer capacitors employing samples 1-5 was 64.0 $F/cm^3$, 63.1 $F/cm^3$, 54.1 $F/cm^3$, 42.2 $F/cm^3$, and 30.0 $F/cm^3$, respectively. A dry distillation temperature in the wide range of 600~1100°C was effective. Hydrogen in the amount of 2.01~0.35% by weight was effective. Large values were obtained for both the amount of nitrogen gas adsorbed and the electrostatic capacitance.

(Example 9: Furan resin, bromine treatment)

Furan resin was hardened, ground and formed into pellets by adding phenol resin as a binder. Dry distillate carbon samples 1-4 were obtained by subjecting approximately 15g of this material to dry distillation at a nitrogen gas flow rate of 1L/min by heating for 20 min at 600°C, 800°C, 1000°C, and 1100°C, respectively. The amount of hydrogen included in samples 1-4 was 2.10% by weight, 0.90% by weight, 0.34% by weight, and 0.24% by weight, respectively. Bromination was then carried out on each of the samples by heating for 3 hours at 600°C under a 1L/min flow rate of nitrogen gas containing 8% by volume bromine. The increase in weight of samples 1-4 during bromination was 23.0% by weight, 19.0% by weight, 5.2% by weight, and 2.8% by weight, respectively. These samples were then debrominated by heating at 900°C for 20 min at a nitrogen gas flow rate of 2L/min, and then heating again at 700°C at a 1L/min flow rate of nitrogen gas containing 25°C saturated steam.

The amount of nitrogen gas adsorbed by samples 1-4 was 15.2 $cm^3/g$, 13.9 $cm^3/g$, 12.6 $cm^3/g$, and 12.1 $cm^3/g$, respectively. The electrostatic capacitance of electric double layer capacitors employing samples 1-4 was 74.0 $F/cm^3$, 74.0 $F/cm^3$, 50.5 $F/cm^3$, and 44.3 $F/cm^3$, respectively. A dry distillation temperature in the wide range of 600~1100°C was effective. Hydrogen in the amount of 2.10~0.24% by weight was effective. Large values were obtained for both the amount of nitrogen gas adsorbed and the electrostatic capacitance.

(Example 10: Vinylidene chloride resin, bromine treatment)

Vinylidene chloride resin was dry distilled for 30 min at 500°C, ground and formed into pellets using phenol resin as a binder. Dry distillate carbon samples 1-4 were obtained by subjecting approximately 15g of this material to dry distillation again by heating for 20 min under a nitrogen gas flow rate of 1L/min at 600°C, 800°C, 1000°C, and 1100°C, respectively. The amount of hydrogen included in samples 1-4 was 2.01% by weight, 0.90% by weight, 0.32% by weight, and 0.19% by weight, respectively. Bromination was then carried out on each of the samples by heating for 3 hours at 600°C under a 1L/min flow rate of nitrogen gas containing 8% by volume bromine. The increase in weight of samples 1-4 during bromination was 25.0% by weight, 18.0% by weight, 6.6% by weight, and 3.2% by weight, respectively. These samples were then debrominated by heating at 900°C for 20 min at a nitrogen gas flow rate of 2L/min, and then heating again at 700°C at a 1L/min flow rate of nitrogen gas containing 25°C saturated steam.

The amount of nitrogen gas adsorbed by samples 1-4 was 15.1 $cm^3/g$, 14.6 $cm^3/g$, 13.2 $cm^3/g$, and 12.6 $cm^3/g$, respectively. The electrostatic capacitance of the electric double layer capacitors employing samples 1-4 was 72.4 $F/cm^3$, 70.0 $F/cm^3$, 51.1 $F/cm^3$, and 44.6 $F/cm^3$, respectively. A dry distillation temperature in the wide range of 600~1100°C was effective. Hydrogen in the amount of 2.01~0.19% by weight was effective. Large values were obtained for both the amount of nitrogen gas adsorbed and the electrostatic capacitance.

The results of the comparative examples and examples are shown in Tables 1 and 2, and FIGS. 5 (quantity of nitrogen gas adsorbed) and 6 (electrostatic capacitance). As these results show, the production method of the present invention is effective in providing a porous carbon material having high nitrogen gas adsorption capabilities and electrostatic capacitance.

Table 1

| [1] | [2] | [3] | [4] °C | [5] wt% | [6] | [7] °C | [8] wt% | [9] °C | [10] °C | [11] $cm^3/g$ | [12] $F/cm^3$ |
|---|---|---|---|---|---|---|---|---|---|---|---|
| Comp. Ex. 1 | Phenol resin | (1) | 600 | | -- | -- | -- | -- | -- | 5.2 | 7.7 |
| | | (2) | 800 | | -- | -- | -- | -- | -- | 10.4 | 16.1 |
| | | (3) | 1000 | | -- | -- | -- | -- | -- | 11.2 | 14.4 |
| | | (4) | 1100 | | -- | -- | -- | -- | -- | 10.8 | 11.8 |
| Comp. Ex. 2 | Phenol resin | (1) | 300 | | Cl | 300 | -0.7 | 900 | 700 | 10.9 | 15.3 |
| | | (2) | 400 | | Cl | 400 | -1.8 | 900 | 700 | 10.9 | 15.2 |
| Comp. Ex. 3 | char | (1) | 600 | | -- | -- | -- | -- | -- | 4.7 | 3.7 |
| | | (2) | 700 | | -- | -- | -- | -- | -- | 5.6 | 11.3 |
| | | (3) | 800 | | -- | -- | -- | -- | -- | 7.2 | 12.9 |
| | | (4) | 1000 | | -- | -- | -- | -- | -- | 9.1 | 9.5 |
| | | (5) | 1100 | | -- | -- | -- | -- | -- | 7.6 | 6.0 |
| Comp. Ex. 4 | Furan resin | (1) | 600 | | -- | -- | -- | -- | -- | 4.8 | 5.7 |
| | | (2) | 800 | | -- | -- | -- | -- | -- | 9.9 | 15.3 |
| | | (3) | 1000 | | -- | -- | -- | -- | -- | 10.6 | 11.2 |
| | | (4) | 1100 | | -- | -- | -- | -- | -- | 6.8 | 6.3 |
| Comp. Ex. 5 | Vinylidene chloride resin | (1) | 600 | | -- | -- | -- | -- | -- | 7.4 | 6.6 |
| | | (2) | 800 | | -- | -- | -- | -- | -- | 10.6 | 15.8 |
| | | (3) | 1000 | | -- | -- | -- | -- | -- | 11.0 | 14.1 |
| | | (4) | 1100 | | -- | -- | -- | -- | -- | 10.8 | 11.1 |
| Comp. Ex. 6 | pitch | (1) | 600 | | -- | -- | -- | -- | -- | 1.9 | 2.1 |
| | | (2) | 800 | | -- | -- | -- | -- | -- | 7.7 | 12.0 |
| | | (3) | 1000 | | -- | -- | -- | -- | -- | 8.9 | 8.2 |
| | | (4) | 1100 | | -- | -- | -- | -- | -- | 7.5 | 5.0 |

Table Key:

[1] Comp. Ex., Ex. No. [2] type of raw material [3] sample number [4] dry distillation temp. (°C)

[5] hydrogen content (wt%) [6] type of halogen gas [7] halogenation temp. (°C) [8] increase in weight during halogenation (wt%) [9] temp (°C) of heat treatment (high-temp dehalogenation) under nitrogen gas flow

[10] temp (°C) of heat treatment (low-temp dehalogenation) in steam atmosphere

[11] quantity nitrogen gas adsorbed ($cm^3/g$) [12] electrostatic capacitance ($F/cm^3$) of electric double layer capacitor

-- no processing

Table 2

| [1] | [2] | [3] | [4] °C | [5] wt% | [6] | [7] °C | [8] wt% | [9] °C | [10] °C | [11] $cm^3/g$ | [12] $F/cm^3$ |
|---|---|---|---|---|---|---|---|---|---|---|---|
| Ex. 1 | phenol resin | (1) | - | 3.00 | Cl | 500 | -14.7 | 900 | 700 | 14.0 | 66.4 |
| Ex. 2 | phenol resin | (1) | - | 3.00 | Cl | 600 | -21.3 | 900 | 700 | 15.5 | 71.1 |
| | | (2) | 300 | 2.93 | Cl | 600 | -15.7 | 900 | 700 | 15.7 | 73.2 |
| | | (3) | 600 | 2.35 | Cl | 600 | 20.4 | 900 | 700 | 16.2 | 76.6 |
| | | (4) | 800 | 1.00 | Cl | 600 | 22.3 | 900 | 700 | 14.9 | 73.0 |
| | | (5) | 900 | 0.56 | Cl | 600 | 18.3 | 900 | 700 | 14.2 | 65.8 |
| | | (6) | 1000 | 0.48 | Cl | 600 | 12.4 | 900 | 700 | 13.0 | 53.0 |
| | | (7) | 1100 | 0.33 | Cl | 600 | 9.9 | 900 | 700 | 12.2 | 40.5 |
| Ex. 3 | char | (1) | - | 2.80 | Cl | 600 | -65.0 | 900 | 700 | 14.3 | 63.0 |
| | | (2) | 600 | 2.01 | Cl | 600 | 27.9 | 900 | 700 | 15.3 | 64.6 |
| | | (3) | 800 | 0.77 | Cl | 600 | 25.3 | 900 | 700 | 14.2 | 63.9 |
| | | (4) | 900 | 0.54 | Cl | 600 | 18.3 | 900 | 700 | 13.9 | 54.6 |
| | | (5) | 1000 | 0.47 | Cl | 600 | 7.3 | 900 | 700 | 13.0 | 42.5 |
| | | (6) | 1100 | 0.35 | Cl | 600 | 3.9 | 900 | 700 | 12.1 | 30.1 |
| Ex. 4 | furan resin | (1) | - | 3.20 | Cl | 600 | -45.3 | 900 | 700 | 14.5 | 72.0 |
| | | (2) | 300 | 3.10 | Cl | 600 | -30.2 | 900 | 700 | 14.8 | 73.3 |
| | | (3) | 600 | 2.10 | Cl | 600 | 23.2 | 900 | 700 | 15.4 | 74.3 |
| | | (4) | 800 | 0.90 | Cl | 600 | 19.3 | 900 | 700 | 14.1 | 75.0 |
| | | (5) | 1000 | 0.34 | Cl | 600 | 5.8 | 900 | 700 | 12.9 | 51.5 |
| | | (6) | 1100 | 0.20 | Cl | 600 | 3.3 | 900 | 700 | 12.4 | 45.5 |
| Ex. 5 | vinylidene chloride resin | (1) | 600 | 2.01 | Cl | 600 | 25.2 | 900 | 700 | 15.3 | 72.8 |
| | | (2) | 800 | 0.90 | Cl | 600 | 18.5 | 900 | 700 | 14.6 | 70.4 |
| | | (3) | 1000 | 0.32 | Cl | 600 | 7.1 | 900 | 700 | 13.4 | 51.3 |
| | | (4) | 1100 | 0.19 | Cl | 600 | 3.8 | 900 | 700 | 12.8 | 44.9 |

Table Key:

[1] Comp. Ex., Ex. No. [2] type of raw material [3] sample number [4] dry distillation temp. (°C)

[5] hydrogen content (wt%) [6] type of halogen gas [7] halogenation temp. (°C) [8] increase in weight during halogenation (wt%) [9] temp (°C) of heat treatment (high-temp dehalogenation) under nitrogen gas flow

[10] temp (°C) of heat treatment (low-temp dehalogenation) in steam atmosphere

[11] quantity nitrogen gas adsorbed ($cm^3/g$) [12] electrostatic capacitance ($F/cm^3$) of electric double layer capacitor

Table 3

| [1] | [2] | [3] | [4] °C | [5] wt% | [6] | [7] °C | [8] wt% | [9] °C | [10] °C | [11] $cm^3/g$ | [12] |
|---|---|---|---|---|---|---|---|---|---|---|---|
| Ex. 6 | pitch | (1) | - | 4.20 | Cl | 600 | -12.0 | 900 | 700 | 14.7 | 67.6 |
| | | (2) | 600 | 2.01 | Cl | 600 | 19.8 | 900 | 700 | 15.5 | 69.5 |
| | | (3) | 800 | 0.90 | Cl | 600 | 20.0 | 900 | 700 | 14.4 | 67.2 |
| | | (4) | 1000 | 0.40 | Cl | 600 | 6.4 | 900 | 700 | 12.7 | 47.4 |
| | | (5) | 1100 | 0.22 | Cl | 600 | 3.5 | 900 | 700 | 12.0 | 34.5 |
| Ex. 7 | phenol resin | (1) | 600 | 2.35 | Br | 600 | 19.3 | 900 | 700 | 16.2 | 76.6 |
| | | (2) | 800 | 1.00 | Br | 600 | 30.1 | 900 | 700 | 14.8 | 72.7 |
| | | (3) | 900 | 0.56 | Br | 600 | 18.0 | 900 | 700 | 14.0 | 65.0 |
| | | (4) | 1000 | 0.48 | Br | 600 | 12.0 | 900 | 700 | 13.0 | 52.0 |
| | | (5) | 1100 | 0.33 | Br | 600 | 9.6 | 900 | 700 | 12.0 | 40.5 |
| Ex. 8 | char | (1) | 600 | 2.01 | Br | 600 | 26.9 | 900 | 700 | 14.9 | 64.0 |
| | | (2) | 800 | 0.77 | Br | 600 | 24.4 | 900 | 700 | 13.9 | 63.1 |
| | | (3) | 900 | 0.54 | Br | 600 | 17.6 | 900 | 700 | 13.4 | 54.1 |
| | | (4) | 1000 | 0.47 | Br | 600 | 7.1 | 900 | 700 | 12.5 | 42.2 |
| | | (5) | 1100 | 0.35 | Br | 600 | 3.6 | 900 | 700 | 12.0 | 30.1 |
| Ex. 9 | furan resin | (1) | 600 | 2.10 | Br | 600 | 23.0 | 900 | 700 | 15.2 | 74.0 |
| | | (2) | 800 | 0.90 | Br | 600 | 19.0 | 900 | 700 | 13.9 | 74.0 |
| | | (3) | 1000 | 0.34 | Br | 600 | 5.2 | 900 | 700 | 12.6 | 50.5 |
| | | (4) | 1100 | 0.24 | Br | 600 | 2.8 | 900 | 700 | 12.1 | 44.3 |
| Ex. 10 | vinylidene chloride resin | (1) | 600 | 2.01 | Br | 600 | 25.0 | 900 | 700 | 15.1 | 72.4 |
| | | (2) | 800 | 0.90 | Br | 600 | 18.0 | 900 | 700 | 14.6 | 70.0 |
| | | (3) | 1000 | 0.32 | Br | 600 | 6.6 | 900 | 700 | 13.2 | 51.3 |
| | | (4) | 1100 | 0.19 | Br | 600 | 3.2 | 900 | 700 | 12.6 | 44.6 |

Table Key:

[1] Comp. Ex., Ex. No. [2] type of raw material [3] sample number [4] dry distillation temp. (°C)

[5] hydrogen content (wt%) [6] type of halogen gas [7] halogenation temp. (°C) [8] increase in weight during halogenation (wt%) [9] temp (°C) of heat treatment (high-temp dehalogenation) under nitrogen gas flow

[10] temp (°C) of heat treatment (low-temp dehalogenation) in steam atmosphere

[11] quantity nitrogen gas adsorbed ($cm^3/g$) [12] electrostatic capacitance ($F/cm^3$) of electric double layer capacitor

-- no processing

Industrial applicability

The present invention provides a porous carbon which adsorbs a significant quantity of small molecules such as nitrogen gas when employed as an adsorbing agent, and which has a large electrostatic capacity when employed in an electric double layer capacitor.

The porous carbon obtained in the present invention has micro or sub-micro pores. Thus, in addition to thes applications mentioned above, it may also be used as an adsorbing agent for gases having a small molecular diameter such as argon or methane, an electrode material for batteries such as lithium ion secondary batteries, a catalyst, a carrier for a catalyst, or in various biochemical applications, for example.

## Claims

1. A production method for porous carbon material characterized in that the porous carbon material is produced by treating one of either a carbon compound and a dry distillate carbon obtained by dry distillation of a carbon compound with halogen.

2. A production method for porous carbon material by treating a dry distillate carbon obtained by dry distillation of a carbon compound with halogen according to claim 1, characterized in that the hydrogen content of the dry distillate carbon is in the range of 0.1~5.0% by weight.

3. A production method for porous carbon material by treating a dry distillate carbon obtained by dry distillation of a carbon compound with halogen according to claim 1, characterized in that the dry distillate carbon is obtained by dry distillation of the carbon compound at a temperature of 250-1200°C.

4. A production method for porous carbon material according to one of claim 2 and 3, characterized in that the halogenation treatment comprises a halogenating process in which a dry distillate carbon is reacted with a halogen by heating the dry distillate carbon in one of either a halogen gas and an inert gas containing a halogen; and a dehalogenating process in which the halogenated dry distillate carbon is heated in one type of atmosphere selected from the group consisting of an inert gas, an evacuated environment, a hydrogenous compound gas, and an inert gas contain a hydrogenous compound.

5. A production method for porous carbon material by treating a carbon compound with halogen according to claim 1, characterized in that the carbon compound is one type selected from the group consisting a raw carbon compound, a carbon compound obtained by heating a raw carbon compound at a temperature of 250°C or less, and a mixture thereof.

6. A production method for porous carbon material according to claim 5, characterized in that the halogen treatment comprises a halogenating process in which a carbon compound is reacted with a halogen by heating the carbon compound in one of either a halogen gas and an inert gas containing a halogen; and a dehalogenating process in which the halogenated carbon compound is heated in one type of atmosphere selected from the group consisting of an inert gas, an evacuated environment, a hydrogenous compound gas, and an inert gas contain a hydrogenous compound.

7. A production method for porous carbon material according to claim 6, characterized in that the halogenating process is carried out at a temperature in the range of 500~1000°C.

8. A production method for porous carbon material according to one of claims 1, 2, 3, and 5, characterized in that the halogen is at least one type selected from the group consisting of chlorine and bromine.

9. A production method for porous carbon material according to one of claims 1, 2, 3, and 5, characterized in that the raw carbon compound is at least one type selected from the group consisting of char, phenol resin, furan resin, vinylidene chloride resin, and pitch.

10. Porous carbon material produced according to one of the methods disclosed in claims 1, 2, 3, and 5, characterized in that the quantity of nitrogen adsorbed at 25°C and 1 atmospheric pressure is 12~20 $cm^3$/g.

11. Porous carbon material produced according to one of the methods disclosed in claims 1, 2, 3, and 5, characterized in having an electrostatic capacity in an electric double layer capacitor of 30~90F/$cm^3$.

FIG.1

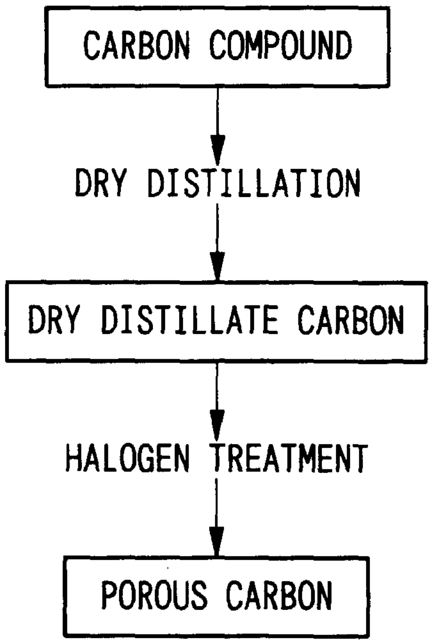
CARBON COMPOUND
DRY DISTILLATION
DRY DISTILLATE CARBON
HALOGEN TREATMENT
POROUS CARBON

FIG.2

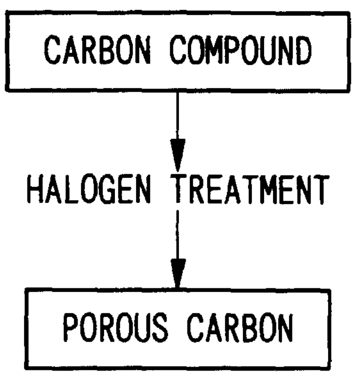
CARBON COMPOUND
HALOGEN TREATMENT
POROUS CARBON

FIG.3

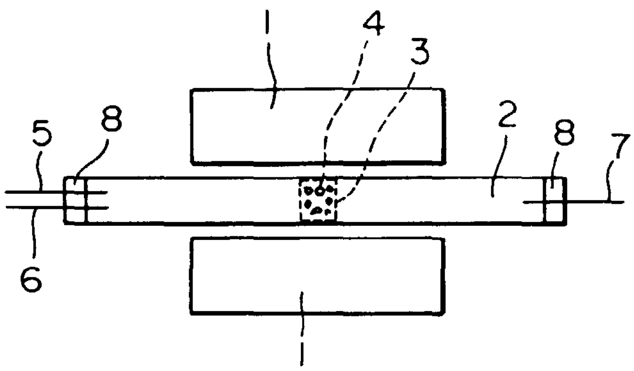


FIG.4

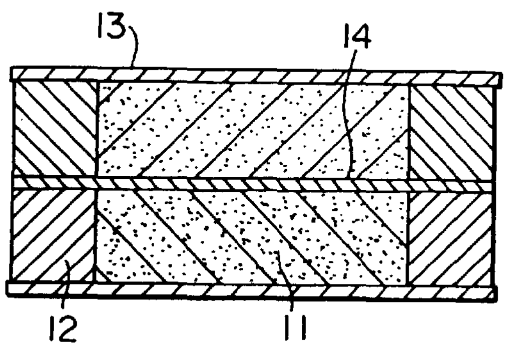

FIG.5

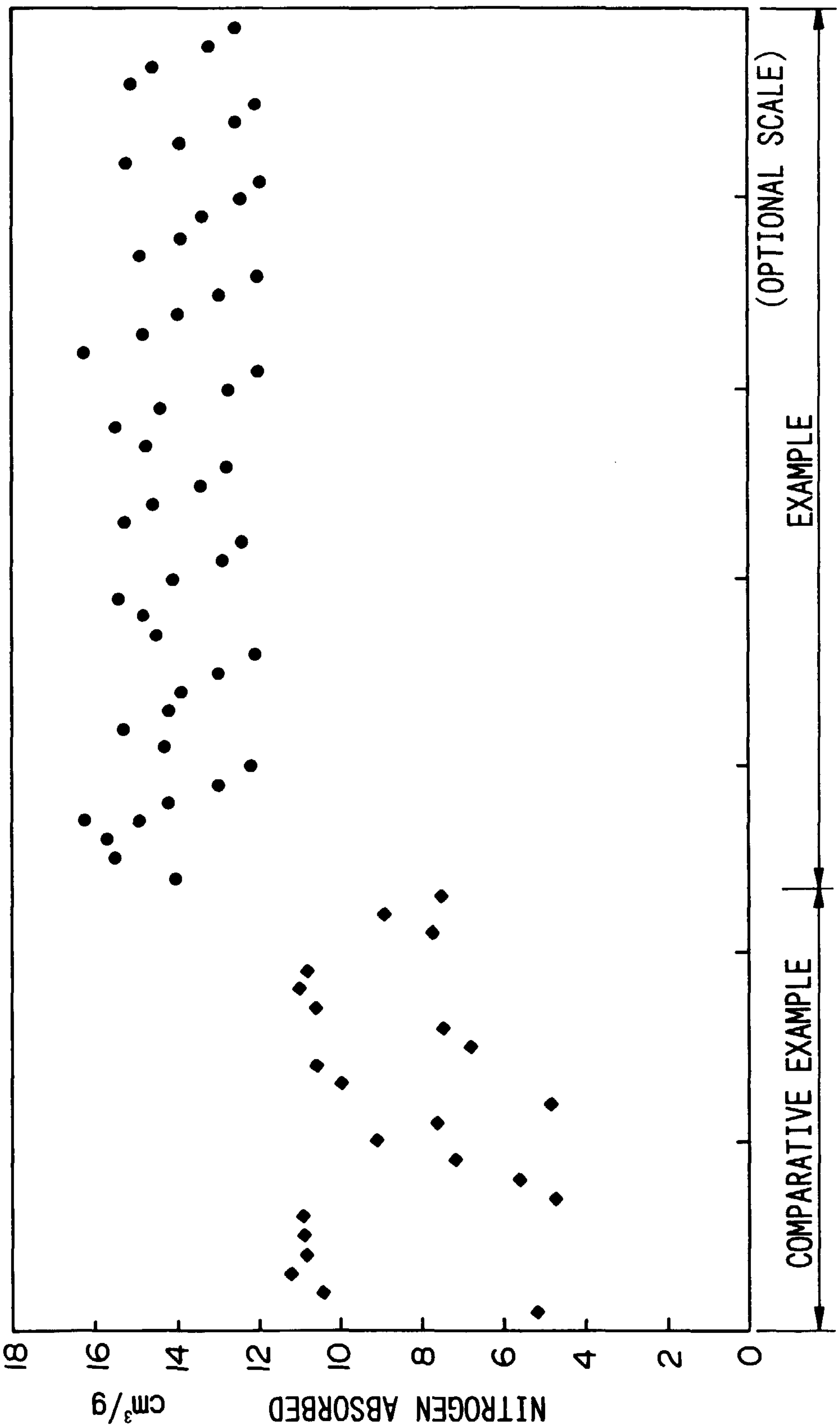
NITROGEN ABSORBED
cm³/g
18
16
14
12
10
8
6
4
2
0
COMPARATIVE EXAMPLE
EXAMPLE
(OPTIONAL SCALE)

FIG.6

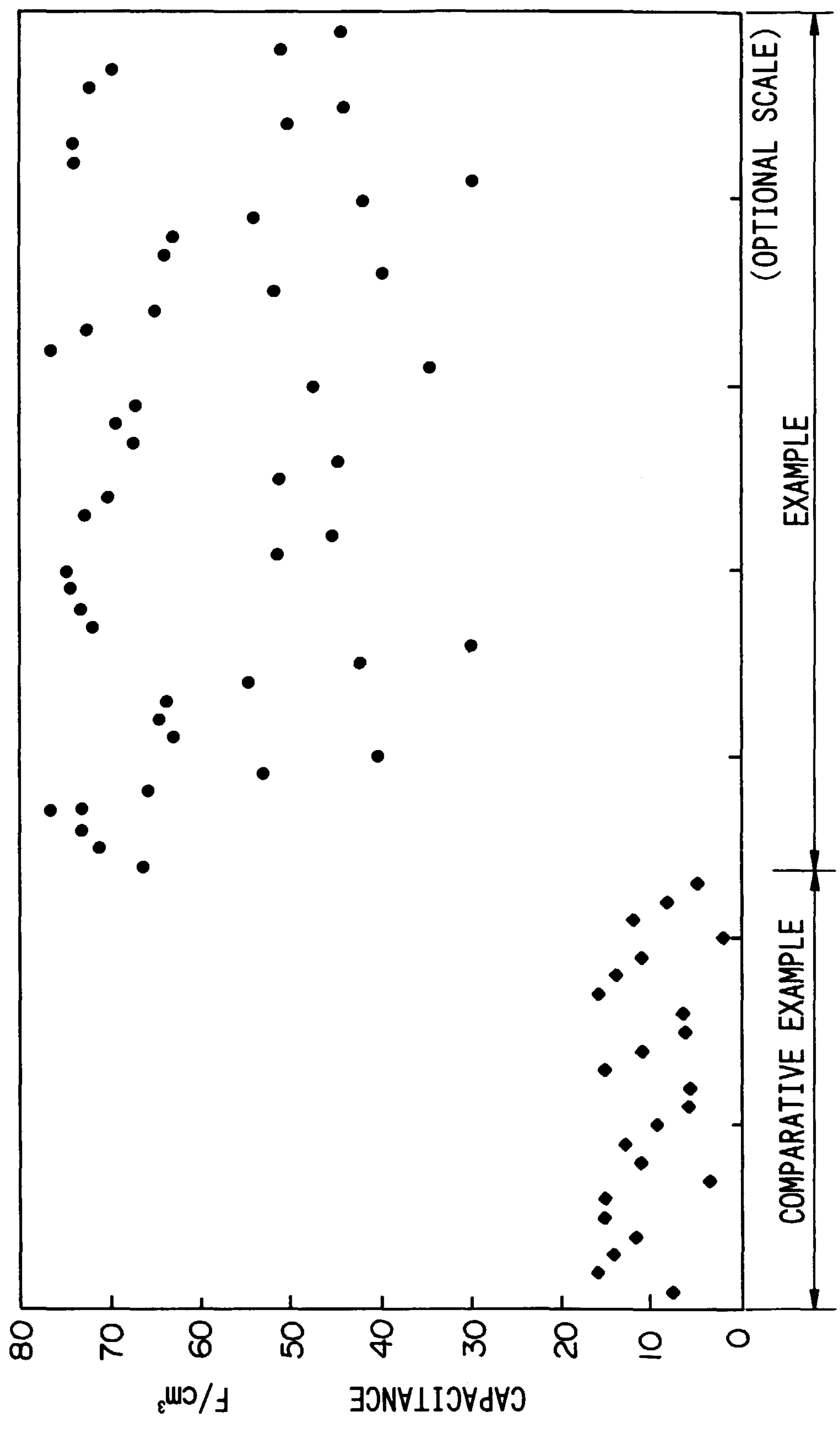
CAPACITANCE F/cm³
0
10
20
30
40
50
60
70
80
COMPARATIVE EXAMPLE
EXAMPLE
(OPTIONAL SCALE)

## INTERNATIONAL SEARCH REPORT

International application No. PCT/JP97/04036

**A. CLASSIFICATION OF SUBJECT MATTER**

Int. $Cl^6$ C01B31/08, C04B38/00

According to International Patent Classification (IPC) or to both national classification and IPC

**B. FIELDS SEARCHED**

Minimum documentation searched (classification system followed by classification symbols)

Int. $Cl^6$ C01B31/08, C04B38/00

Documentation searched other than minimum documentation to the extent that such documents are included in the fields searched

Jitsuyo Shinan Koho 1926 - 1996
Kokai Jitsuyo Shinan Koho 1971 - 1998
Toroku Jitsuyo Shinan Koho 1994 - 1998
Jitsuyo Shinan Toroku Koho 1996 - 1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 8-268773, A (Nippon Sanso Corp.), October 15, 1996 (15. 10. 96)(Family: none) | 1, 5, 7, 8, 11 |
| Y | JP, 8-268773, A (Nippon Sanso Corp.), October 15, 1996 (15. 10. 96)(Family: none) | 2-4, 6, 9, 10 |
| X | JP, 8-279358, A (Kureha Chemical Industry Co., Ltd.), October 22, 1996 (22. 10. 96), Claim 3; Par. No. (0014) & EP, 726606, A1 & CA, 2169114, A | 1, 5, 7-11 |
| A | JP, 8-279358, A (Kureha Chemical Industry Co., Ltd.), October 22, 1996 (22. 10. 96), Claim 3; Par. No. (0014) & EP, 726606, A1 & CA, 2169114, A | 2-4, 6 |
| X | JP, 61-35126, B2 (Director General, Agency of Industrial Science and Technology), August 11, 1986 (11. 08. 86)(Family: none) | 1, 5, 8-11 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| January 23, 1998 (23. 01. 98) | February 3, 1998 (03. 02. 98) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP97/04036

C (Continuation). DOCUMENTS CONSIDERED TO BE RELEVANT

| Category* | Citation of document, with indication, where appropriate, of the relevant passages | Relevant to claim No. |
|---|---|---|
| A | JP, 61-35126, B2 (Director General, Agency of Industrial Science and Technology), August 11, 1986 (11. 08. 86)(Family: none) | 2-4, 6, 7 |
| X | JP, 163916, C1 (Megumi Arai), July 21, 1944 (21. 07. 44)(Family: none) | 1, 3, 8, 10, 11 |
| A | JP, 163916, C1 (Megumi Arai), July 21, 1944 (21. 07. 44)(Family: none) | 2, 4-7, 9 |

Form PCT/ISA/210 (continuation of second sheet) (July 1992)